# FASCICULE DE BREVET EUROPEEN

(11) **EP 3 083 133 B1**
(45) Date de publication et mention de la délivrance du brevet: **21.03.2018**
(21) Numéro de dépôt: 14827813.8
(22) Date de dépôt: 09.12.2014
(51) Int. Cl.: B23P 15/02, B22D 13/06, B22D 25/02, B22C 9/22, F01D 5/28, B22D 27/15

(54) **PROCÉDÉ DE FABRICATION D'UNE PIÈCE DE TURBOMACHINE, ÉBAUCHE INTERMÉDIAIRE ET MOULE OBTENUS**
VERFAHREN ZUR HERSTELLUNG EINES TURBINENTRIEBWERKTEILS SOWIE RESULTIERENDE FORM UND ZWISCHENROHLING
METHOD FOR PRODUCING A TURBINE ENGINE PART, AND RESULTING MOULD AND INTERMEDIATE BLANK

(30) Priorité: 20.12.2013 FR 1363344
(43) Date de publication de la demande: 26.10.2016
(73) Titulaire: SNECMA, 75015 Paris (FR)
(72) Inventeur: HUCHIN, Patrick, Emilien, Paul, Emile, F-77550 Moissy Cramayel Cedex (FR); DESCHANDOL, Karine, F-77550 Moissy Cramayel Cedex (FR); DIGARD BROU DE CUISSART, Sébastien, F-77550 Moissy Cramayel Cedex (FR); FARGEAS, Serge, F-77550 Moissy Cramayel Cedex (FR); SOISSON, Marc, F-77550 Moissy Cramayel Cedex (FR); TEXIER, Anthony, F-77550 Moissy Cramayel Cedex (FR); PIATON, Valéry, F-77550 Moissy Cramayel Cedex (FR)
(74) Mandataire: Pichat, Thierry
(86) Numéro de dépôt international: PCT/FR2014/053246
(87) Numéro de publication internationale: WO 2015/092220

(56) Documents cités:
- EP-A1- 2 067 546
- EP-A1- 2 223 755
- WO-A1-2008/125129
- GB-A- 2 290 998
- JP-A- 2006 336 059

## Description

La présente invention concerne un procédé de fabrication d'une pièce métallique de turbomachine, et en particulier d'une aube de roue de turbine d'un turboréacteur ou d'un turbopropulseur d'avion. La présente invention concerne aussi une ébauche obtenue à partir du procédé selon l'une des revendications 1 à 4 et un moule pour la mise en oeuvre du procédé selon l'une des ces revendications. Il est connu, pour fabriquer une telle pièce, de successivement :
a) couler un alliage métallique dans un moule pour la réalisation d'une ébauche, et
b) usiner l'ébauche pour la réalisation de la pièce.
   Un tel procédé est décrit dans le document GB 2 290 998 A.

Certaines ébauches cylindriques peuvent présenter des différences de microstructures entre leurs centres respectifs et la périphérie. Cela peut entraîner des différences de microstructure au sein d'une même aube.

C'est notamment le cas des pièces réalisées en alliage métallique à base de TiAI.

Dans la technique actuelle, certaines autres ébauches sont obtenues par fonderie en cire perdue dans un moule en céramique dans lequel est coulé l'alliage métallique. Ce moule est difficile à mettre au point et est à usage unique. De plus, des interactions entre le métal en fusion et la céramique peuvent générer des défauts de fonderie à la surface des ébauches, et la cire perdue peut provoquer des défauts géométriques dans les ébauches si elle est de mauvaise qualité.

Par ailleurs, usiner (au moins) une pièce dans une ébauche pose des difficultés de positionnement de la pièce dans l'ébauche. Il faut que la position de cette pièce soit compatible avec les règles métiers de fonderie, d'usinage et du métier auquel la pièce est destinée.

La présente invention permet de remédier à au moins une partie des inconvénients précités de façon simple, efficace et économique.

La solution est présentée dans les revendications indépendantes. Les modes de réalisation préférés sont présentés dans les revendications dépendantes. Selon une première définition, la solution ici proposée consiste en ce que l'ébauche obtenue par coulée soit pleine, polyédrique et présente un premier et un deuxième côtés entre lesquels s'étendent un troisième et un quatrième côtés qui s'évasent entre eux depuis le premier côté vers le deuxième côté, suivant un premier angle puis, à partir d'une rupture de pente, suivant un second angle plus important que le premier, et ladite pièce est usinée dans l'ébauche.

Pour parvenir à la solution ici proposée, il a fallu mobiliser des savoir-faire en provenance de divers champs de compétence (fonderie, usinage). Les formes d'ébauches et de cavités de moulage qui en ont résulté ont une morphologie pertinente.

Concernant le moule utilisé, on conseille qu'il comprenne en conséquence au moins une cavité de moulage, de préférence une par ébauche, cette cavité présentant ainsi un premier et un deuxième côtés entre lesquels s'étendent un troisième et un quatrième côtés qui s'évasent entre eux depuis le premier côté vers le deuxième côté, suivant un premier angle puis, à partir d'une rupture de pente, suivant un second angle plus important que le premier.

De préférence, il s'agira d'un moule rotatif pour le moulage simultané de plusieurs ébauches par centrifugation. Le moule sera alors lié à des moyens de mise en rotation autour d'un axe central de rotation et comprendra plusieurs cavités de moulage s'étendant radialement autour dudit axe central.

Cette technologie permet de réaliser des ébauches en TiAl, en particulier pour des aubes de turbomachine.

Dans ce domaine des turbomachines, le procédé auquel le moule est destiné s'applique ainsi bien au moulage d'aubes, à savoir des pièces présentent chacune un axe longitudinal et, le long de cet axe, un pied à une première extrémité, un talon à une seconde extrémité, et une pale à section incurvée qui s'étend entre elles.

Dans cette application, on conseille alors (en combinaison ou non), pour que chaque ébauche tende vers une intégration d'une partie au moins des contraintes de remplissage, de solidification, de démoulage, d'usinage de la pièce afin que celle-ci soit conforme aux caractéristiques attendues :
- que l'ébauche présente un premier et un deuxième côtés entre lesquels s'étendent un troisième et un quatrième côtés qui s'évasent entre eux depuis le premier côté vers le deuxième côté, suivant un premier angle puis, à partir d'une rupture de pente, suivant un second angle plus important que le premier,
- que l'ébauche soit définie par une première et une deuxième pyramides tronquées, la deuxième pyramide étant le prolongement de la première pyramide par la grande base de la première pyramide qui se superpose exactement à la petite base de la deuxième,
- que les troisième et quatrième côtés soient chacun de forme générale trapézoïdale,
- que des cinquième et sixième côtés de l'ébauche soient chacun sous la forme générale de deux trapèzes, avec chacun une grande base et une petite base et l'un qui prolonge l'autre par la grande base du premier trapèze qui est accolée à la petite base du deuxième trapèze,
- que l'ébauche présente un plan de symétrie perpendiculaire aux premier et deuxième côtés qui seront alors parallèles entre eux,
- que le premier angle précité soit compris entre 0° et 15°, et de préférence entre 0° et 8°,
- que le second angle précité soit inférieur à 120°, et de préférence inférieur à 90°,
- que l'angle total d'évasement des troisième et quatrième côtés entre les premier et deuxième côtés soit compris entre 1° et 15°, et de préférence entre 3° et 8°,
- que la rupture de pente soit située à moins de 85%, et de préférence moins de 75%, de la plus courte distance entre les premier et deuxième côté, en partant du premier côté.

La cavité de moulage sera adaptée en conséquence.

Le moule, qui est par exemple un moule permanent, et dans lequel est coulé l'alliage, sera de préférence métallique, ce qui permettra de limiter la contamination du matériau des ébauches par celui du moule.

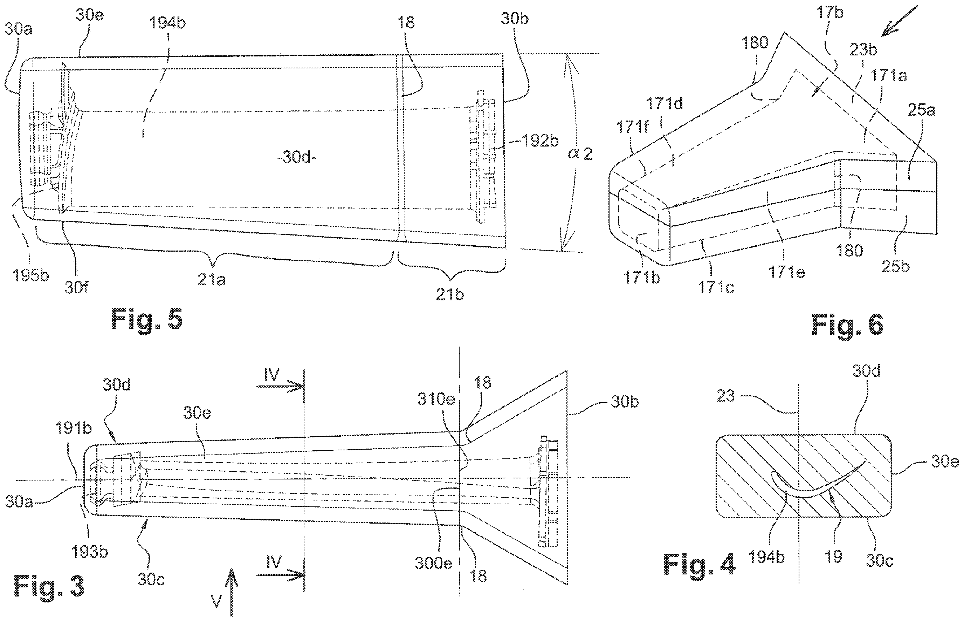

D'autres avantages et caractéristiques de l'invention apparaîtront à la lecture de la description suivante faite à titre d'exemple non limitatif et en référence aux dessins annexés où les figures 3 à 5 sont précises dimensionnellement et correspondent à une réalité industrielle, à l'image de plans cotés, et dans lesquels :
- la figure 1 schématise un dispositif de fabrication d'ébauches ou barreaux, par moulage,
- la figure 2 est une vue schématique de face d'une ébauche moulée, obtenue par exemple par le dispositif de moulage de la figure 1,
- les figures 3,4,5 sont des vues d'ébauche, respectivement de face à nouveau, en coupe transversale (flèches IV-IV), et d'un côté (flèche V), et
- la figure 6 schématise une partie de moule, avec sa cavité de moulage de l'ébauche précitée.

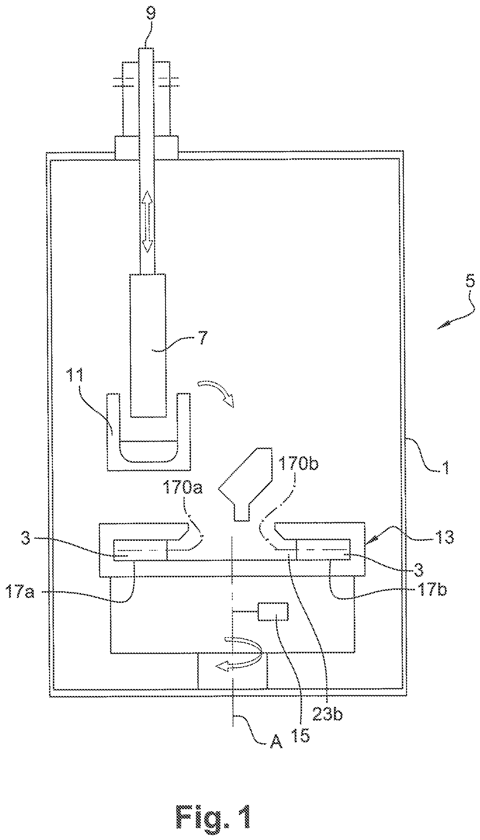

Ainsi, on voit figure 1 un dispositif 1 de fabrication d'ébauches ou barreaux 3, par des opérations successives de fonte, coulée et moulage.

Le dispositif 1 comprend une enceinte 5 fermée et étanche dans laquelle est appliqué un vide partiel. Un lingot 7 en alliage métallique, à base de TiAl par exemple, est fixé à une extrémité d'une électrode 9 qui est reliée à une borne d'une source de courant dont l'autre borne est reliée à un creuset 11 logé dans l'enceinte 5. Lorsque le lingot 7 se rapproche du creuset 11, des arcs électriques se forment entre le creuset et le lingot ce qui provoque la fusion du lingot qui tombe alors au fond du creuset (VSM Vacuum Skull Melting). Lorsque le lingot est complètement fondu dans le creuset l'alliage métallique est versé dans un moule 13, de préférence métallique et permanent.

Ce moule 13 permet de couler l'alliage par centrifugation. Pour cela, le moule est mis en rotation autour d'un axe A par l'intermédiaire d'un moteur 15.

Le moule comprend plusieurs logements ou cavités, telles ici 17a, 17b, qui s'étendent radialement autour de l'axe A qui est ici vertical. L'alliage à couler est apporté vers le centre et la rotation du moule le répartit vers les cavités. On conseille que les cavités soient régulièrement espacées autour de cet axe.

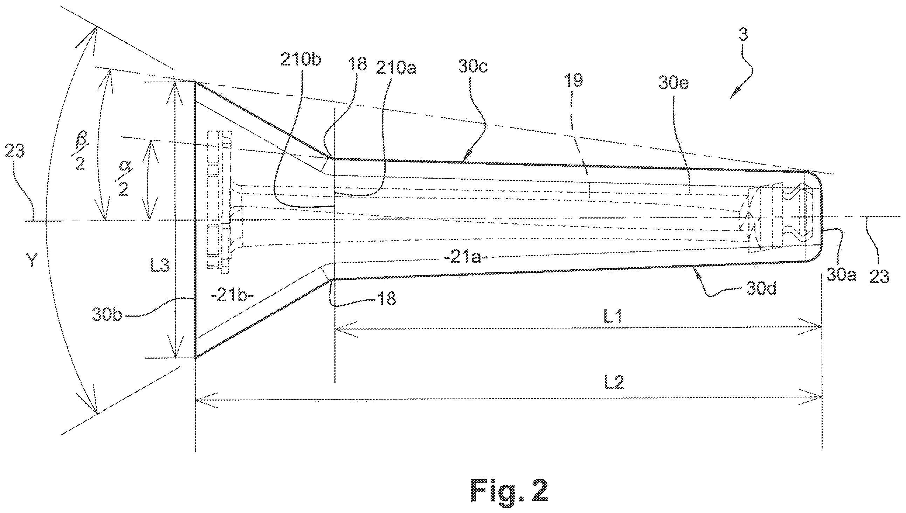

De préférence, l'axe A sera vertical et celui (tels ici 170a, 170b) de chaque cavité sera horizontal. Sur la figure 1, les cavités, telles 17a, 17b, de moulage n'ont toutefois pas été représentées avec leur(s) forme(s) optimisée(s), notamment pour convenir au moulage d'une ébauche 3 conforme à celle des figures 2 à 5.

Les forces centrifuges générées par la rotation du moule forcent l'alliage en fusion à pénétrer dans ces cavités et à les remplir.

Après refroidissement, le moule 13 est démonté et les pièces moulées sont extraites.

On aura compris que la forme des cavités 17a,17b... correspondra à celle des pièces. Ce qui suit concernant les pièces ou ébauches s'applique donc aussi aux cavités du moule.

Sur la figure 2, qui montre la forme générale d'une ébauche moulée conforme à la solution ici proposée, et qui peut être l'une de celles référencées 3 ci-avant, on note d'emblée que ce barreau ou ébauche 3 est totalement plein, polyédrique et présente, parmi les faces de ce polyèdre, un premier et un deuxième côtés 30a,30b entre lesquels s'étendent un troisième et un quatrième côtés 30c,30d qui s'évasent entre eux depuis le premier côté 30b vers le deuxième côté 30a , suivant un premier angle α puis, à partir d'une rupture de pente 18, suivant un second angle γ plus important que le premier. Les angles de l'ébauche sont arrondis, comme illustré.

C'est donc à partir de cette ébauche, considérée dans son état solide, que la pièce 19, ici une aube de turbomachine, sera usinée dans l'ébauche.

Dans la version préférée illustrée qui favorise un usinage optimisé, en termes de qualité de pièces finies et de consommation de matière, l'ébauche 3 est définie en quelque sorte par une première et une deuxième pyramides, respectivement 21a,21b, chacune tronquée suivant un plan commun.

La deuxième pyramide est le prolongement de la première pyramide par l'intermédiaire de la petite base 210b de la deuxième pyramide qui se superpose exactement à la grande base 210a de la première pyramide.

Ainsi, sur l'ébauche complète, comme illustré, les première et deuxième pyramides n'en font qu'une.

Pour optimiser encore l'atteinte d'une haute qualité de pièces finies et de consommation de matière aussi limitée que possible, il est même conseillé que, comme mieux détaillé sur les figures 3 à 5 :
- les troisième et quatrième côtés 30c,30d soient chacun de forme générale trapézoïdale, et/ou,
- des cinquième et sixième côtés 30e,30f de l'ébauche soient chacun sous la forme générale de deux trapèzes, avec chacun une grande base, telle 300e pour celle du premier trapèze du cinquième côté 30e, et une petite base, telle 310e pour celle du deuxième trapèze du même côté 30e, et l'un qui prolonge l'autre par la grande base du premier trapèze qui est accolée à la petite base du deuxième trapèze.

Pour mémoire, un trapèze est un quadrilatère, possédant deux côtés opposés parallèles appelés bases.

L'ébauche 3 pourra présenter un plan 23 de symétrie perpendiculaire aux premier et deuxième côtés 30a,30b.

Pour l'équilibre d'ensemble de la forme de l'ébauche et l'économie de matière visée, eu égard à la fabrication de cette aube 19, on recommande que les côtés 30a,30b soient parallèles entre eux.

Il est par ailleurs conseillé :
- que le sixième côté 30f soit perpendiculaire aux premier et deuxième côtés 30a,30b, et de préférence,
- que les cinquième et sixième côtés 30e,30f présentent entre eux un angle a2 compris entre 0° et 15°, et de préférence entre 0° et 8° .

Concernant les valeurs à assurer pour les autres angles précités que :
- le premier angle α soit compris entre 0° et 15°, et de préférence entre 0° et 8°,
- le second angle γ soit inférieur à 120°, et de préférence inférieur à 90°,
- l'angle total β (cumul des angles α et γ) d'évasement des troisième et quatrième côtés (30c,30d) entre les premier et deuxième côtés (30a,30b) soit compris entre 1° et 15°, et de préférence entre 3° et 8°.

Quant à la rupture de pente 18, on recommande qu'elle soit située à moins de 85%, et de préférence moins de 75%, de la plus courte distance L2 entre les premier et deuxième côtés 30a,30b, en partant du premier côté 30a (L1/L2 = 0,85, et de préférence moins de 0,75, avec L1 : plus courte distance entre le premier côté 30a et la rupture de pente 18).

A partir des figures 2 à 5, on aura noté que l'ébauche complète présente donc de préférence huit faces planes.

Les règles précitées d'élaboration de l'ébauche permettront un remplissage du moule et une solidification adéquates, un positionnement optimisé de la pièce 19 à usiner dans l'ébauche et un volume hors tout de cette ébauche défini afin de minimiser les temps d'usinage.

Concernant cette pièce 19, on remarque sur les figures que si la pièce est une aube, elle présentera (figure 3) un axe longitudinal 191b et, le long de cet axe, un pied 193b adjacent à une plate-forme intérieure 195b (figure 5), à une première extrémité, un talon (ou plate-forme extérieure) 192b à une seconde extrémité, et une pale 194b (figures 4,5) à section incurvée qui s'étend entre les plateformes. L'axe longitudinal 191b pourra passer par le centre géométrique du pied et du talon. Il coupe les côtés opposés 30a,30b.

La pale de l'aube sera avantageusement prévue pour être usinée avec sa face convexe (figure 4) orientée en direction de la face 30c, la face opposée concave étant donc alors orientée en direction de la face 30d.

On remarque également que le talon (ou plate-forme extérieure) 192b est prévu pour être usiné face au, et à proximité immédiate du côté 30b, tandis que la plateforme intérieure 193b est immédiatement proche du côté opposé 30a.

Si, comme préféré, les ébauches 3 sont coulées par centrifugation dans un moule rotatif, tel le moule 13, on utilisera de préférence un moule à coquilles.

Concernant les cavités de moulage, il est recommandé ce qui suit, comme illustré figure 6 où l'ébauche à mouler est donc celle des figures précédentes 2 à 5.

Ainsi, conformément à ce qui a été déjà mentionné, le moule concerné comprend (au moins) une cavité 17b de moulage de l'ébauche qui présente un premier et un deuxième côtés 171a,171b entre lesquels s'étendent un troisième et un quatrième côtés 171c,171d qui s'évasent entre eux depuis le deuxième côté vers premier le côté, suivant un premier angle puis, à partir d'une rupture de pente 180, suivant un second angle plus important que le premier.

Egalement comme précédemment mentionné, il est conseillé :
- que les troisième et quatrième côtés 171c,171d soient chacun de forme générale trapézoïdale, et/ou,
- que les cinquième et sixième côtés 171e,171f de la cavité soient chacun en la forme générale de deux trapèzes, avec chacun une grande base et une petite base et l'un qui prolonge l'autre par la grande base du premier trapèze qui est accolée à la petite base du deuxième trapèze.

Dans l'exemple, l'ouverture d'accès à la (chaque) cavité, ici référencée 23b, est située sur le côté latéral 171b dressé vers lequel la grande base de la plus grande pyramide sera moulée. Le côté opposé 171a définit un fond fermé pour la cavité.

L'enveloppe de moulage comprend (au moins) deux coquilles 25a,25b, chacune incorporant une partie de la cavité de moulage concernée, ici 17b.

C'est par l'ouverture 23b que l'alliage métallique entrera dans la cavité (voir flèche figure 6), voire que l'ébauche moulée, durcie, 3 pourrait en sortir ; toutefois, avec des coquilles 25a,25b séparables on pourra permettre un démoulage plus simple de l'ébauche.

Dans un exemple particulier de réalisation, chaque ébauche pourra avoir une longueur L2, entre les côtés 30a,30b comprise entre 20 à 500 mm , et une longueur L3 du côté 30a comprise entre 10 et 100mm.

## Revendications

1. Procédé de fabrication d'au moins une pièce (19b) métallique de turbomachine, comprenant des étapes consistant à :
a) couler un alliage métallique dans un moule (13) pour la réalisation d'une ébauche (3), et
b) usiner l'ébauche (3) pour la réalisation de ladite au moins une pièce, **caractérisé en ce que** l'ébauche obtenue par coulée est pleine polyédrique et présente un premier et un deuxième côtés (30a,30b) entre lesquels s'étendent un troisième et un quatrième côtés (30c,30d) qui s'évasent entre eux depuis le premier côté (30a) vers le deuxième côté, suivant un premier angle puis, à partir d'une rupture de pente (18), suivant un second angle plus important que le premier, et ladite au moins une pièce est usinée dans l'ébauche.

2. Procédé selon la revendication 1, **caractérisé en ce que** l'ébauche est définie par une première et une deuxième pyramides tronquées (21a,21b), la deuxième pyramide étant le prolongement de la première pyramide par la grande base de la première pyramide qui se superpose exactement à la petite base de la deuxième.

3. Procédé selon la revendication 1 ou 2, **caractérisé en ce que** :
- les troisième et quatrième côtés sont chacun de forme générale trapézoïdale, et/ou,
- des cinquième et sixième côtés (30e,30f) de l'ébauche sont chacun sous la forme générale de deux trapèzes, avec chacun une grande base et une petite base et l'un qui prolonge l'autre par la grande base du premier trapèze qui est accolée à la petite base du deuxième trapèze.

4. Procédé selon la revendication 1 ou 2, **caractérisé en ce que** :
- ladite au moins une pièce (19) est une aube présentant un axe longitudinal (191b) et, le long de cet axe, un pied (193b) à une première extrémité, un talon (192b) à une seconde extrémité, et une pale (194b) à section incurvée qui s'étend entre elles et présente un premier côté convexe et un deuxième côté concave,
- des cinquième et sixième côtés (30e,30f) de l'ébauche sont chacun sous la forme générale de deux trapèzes s'étendant dans un même plan, avec chacun une grande base et une petite base et l'un qui prolonge l'autre par la grande base du premier trapèze qui est accolée à la petite base du deuxième trapèze.

5. Ebauche obtenue à l'issue du moulage selon l'étape a) de la revendication 1, **caractérisé en ce qu'**elle est pleine, polyédrique et présente un premier et un deuxième côtés (30a,30b) entre lesquels s'étendent un troisième et un quatrième côtés (30c,30d) qui s'évasent chacun depuis le premier côté vers le deuxième côté, suivant un premier angle puis, à partir d'une rupture de pente (18), suivant un second angle plus important que le premier.

6. Ebauche obtenue à partir du procédé selon l'une des revendications 1 à 4, **caractérisé en ce qu'**elle est définie par une première et une deuxième pyramides tronquées (21a,21b), la deuxième pyramide étant le prolongement de la première pyramide par la grande base de la première pyramide qui se superpose exactement à la petite base de la deuxième.

7. Ebauche obtenue à partir du procédé selon l'une des revendications 1 à 4, **caractérisé en ce que** :
- qu'elle présente un premier et un deuxième côtés (30a,30b) entre lesquels s'étendent un troisième et un quatrième côtés (30c,30d) qui s'évasent entre eux depuis le premier côté vers le deuxième côté, suivant un premier angle puis, à partir d'une rupture de pente (18), suivant un second angle plus important que le premier,
- les troisième et quatrième côtés sont chacun de forme générale trapézoïdale, et/ou,
- des cinquième et sixième côtés (30e,30f) de l'ébauche sont chacun sous la forme générale de deux trapèzes, avec chacun une grande base et une petite base et l'un qui prolonge l'autre par la grande base du premier trapèze qui est accolée à la petite base du deuxième trapèze.

8. Ebauche selon l'une des revendications 5 à 7, **caractérisé en ce qu'**elle présente un plan de symétrie (23) perpendiculaire aux premier et deuxième côtés (30a,30b) qui sont parallèles entre eux.

9. Ebauche selon l'une des revendications 5 à 8, **caractérisé en ce que** :
- le premier angle (α) est compris entre 0° et 15°, et de préférence entre 0° et 8°,
- le second angle (γ) est inférieur à 120°, et de préférence inférieur à 90°,
- l'angle total (β) d'évasement des troisième et quatrième côtés entre les premier et deuxième côtés (30a,30b) est compris entre 1° et 15°, et de préférence entre 3° et 8°,
- et la rupture de pente (18) est située à moins de 85%, et de préférence moins de 75%, de la plus courte distance (L2) entre les premier et deuxième côtés, en partant du premier côté (30a).

10. Moule pour la mise en oeuvre du procédé selon l'une des revendications 1 à 4, **caractérisé en ce qu'**il comprend au moins une cavité de moulage de l'ébauche qui présente un premier et un deuxième côtés (171a,171b) entre lesquels s'étendent un troisième et un quatrième côtés (171c,171d) qui s'évasent entre eux depuis le deuxième côté (171a) vers le premier côté, suivant un premier angle puis, à partir d'une rupture de pente (180), suivant un second angle plus important que le premier.

11. Moule pour la mise en oeuvre du procédé selon l'une des revendications 1 à 4, **caractérisé en ce qu'**il comprend au moins une cavité (17b) de moulage de l'ébauche définie par une première et une deuxième pyramides tronquées, la deuxième pyramide étant le prolongement de la première pyramide par la grande base de la première pyramide qui se superpose exactement à la petite base de la deuxième.

12. Moule pour la mise en oeuvre du procédé selon l'une des revendications 1 à 4, **caractérisé en ce qu'**il comprend au moins une cavité de moulage de l'ébauche qui présente :
- un premier et un deuxième côtés (171a,171b) entre lesquels s'étendent un troisième et un quatrième côtés (171c,171d) qui sont chacun de forme générale trapézoïdale, et/ou,
- des cinquième et sixième côtés (171e,171f) de la cavité sont chacun sous la forme générale de deux trapèzes, avec chacun une grande base et une petite base et l'un qui prolonge l'autre par la grande base du premier trapèze qui est accolée à la petite base du deuxième trapèze.

13. Moule selon l'une des revendications 10 à 12, **caractérisé en ce que** :
- le premier angle (α) est compris entre 0° et 15°, et de préférence entre 0° et 8°,
- le second angle (γ) est inférieur à 120°, et de préférence inférieur à 90°,
- l'angle total (β) d'évasement des troisième et quatrième côtés entre les premier et deuxième côtés (171a,171b) est compris entre 1° et 15°, et de préférence entre 3° et 8°,
- et la rupture de pente (180) est située à moins de 85%, et de préférence moins de 75%, de la plus courte distance (L2) entre les premier et deuxième côtés, en partant du premier côté (171a).

## Patentansprüche

1. Verfahren zum Herstellen eines Metallteils (19b) für ein Turbotriebwerk, umfassend die nachfolgenden Schritte:
a) Gießen einer Metalllegierung in eine Gießform (13) zum Herstellen eines Rohlings (3), und
b) Bearbeiten des Rohlings (3) zum Herstellen des zumindest einen Teils,
**dadurch gekennzeichnet, dass** der durch Gießen erhaltene Rohling polyedrisch massiv ausgeführt ist und eine erste und eine zweite Seite (30a, 30b) aufweist, zwischen denen sich eine dritte und eine vierte Seite (30c, 30d) erstrecken, die sich von der ersten Seite (30a) zur zweiten Seite mit einem ersten Winkel und dann ausgehend von einer Neigungsbruchstelle (18) mit einem zweiten Winkel, der größer ist als der erste, erweitern, wobei das zumindest eine Teil aus dem Rohling spanend gearbeitet wird.

2. Verfahren nach Anspruch 1, **dadurch gekennzeichnet, dass** der Rohling durch eine erste und eine zweite kegelstumpfförmige Pyramide (21a, 21b) definiert ist, wobei die zweite Pyramide die Verlängerung der ersten Pyramide über die größere Grundfläche der ersten Pyramide ist, die exakt die kleinere Grundfläche der zweiten überlagert.

3. Verfahren nach Anspruch 1 oder 2, **dadurch gekennzeichnet, dass**:
- die dritte und die vierte Seite jeweils trapezförmig sind und/oder
- die fünfte und die sechste Seite (30e, 30f) des Rohlings jeweils in Form von zwei Trapezen jeweils mit einer größeren Grundfläche und einer kleineren Grundfläche vorliegen, die sich gegenseitig über die größere Grundfläche des ersten Trapezes verlängern, die an die kleinere Grundfläche des zweiten Trapezes angesetzt ist.

4. Verfahren nach Anspruch 1 oder 2, **dadurch gekennzeichnet, dass**:
- das zumindest eine Teil (19) eine Schaufel ist, die eine Längsachse (191b) und entlang dieser Achse einen Fuß (193b) an einem ersten Ende, einen Absatz (192b) an einem zweiten Ende und ein Schaufelblatt (194b) mit gekrümmten Querschnitt aufweist, das sich zwischen diesen erstreckt und eine erste konvexe Seite und eine zweite konkave Seite aufweist,
- eine fünfte und eine sechste Seite (30e, 30f) des Rohlings jeweils in Form von zwei Trapezen vorliegen, die sich in einer gleichen Ebene erstrecken, jeweils mit einer größeren Grundfläche und einer kleineren Grundfläche, die sich gegenseitig über die größere Grundfläche des ersten Trapezes verlängern, die an die kleinere Grundfläche des zweiten Trapezes angesetzt ist.

5. Rohling, der durch Formen nach Schritt a) von Anspruch 1 erhalten wird, **dadurch gekennzeichnet, dass** er polyedrisch massiv ausgeführt ist und eine erste und eine zweite Seite (30a, 30b) aufweist, zwischen denen sich eine dritte und eine vierte Seite (30c, 30d) erstrecken, die sich von der ersten Seite zur zweiten Seite mit einem ersten Winkel und dann ausgehend von einer Neigungsbruchstelle (18) mit einem zweiten Winkel, der größer ist als der erste, erweitern.

6. Rohling, der ausgehend von dem Verfahren nach einem der Ansprüche 1 bis 4 erhalten wird, **dadurch gekennzeichnet, dass** er durch eine erste und eine zweite kegelstumpfförmige Pyramide (21a, 21b) definiert ist, wobei die zweite Pyramide die Verlängerung der ersten Pyramide über die größere Grundfläche der ersten Pyramide ist, die exakt die kleinere Grundfläche der zweiten überlagert.

7. Rohling, der ausgehend von dem Verfahren nach einem der Ansprüche 1 bis 4 erhalten wird, **dadurch gekennzeichnet, dass**:
- er eine erste und eine zweite Seite (30a, 30b) aufweist, zwischen denen sich eine dritte und eine vierte Seite (30c, 30d) erstrecken, die sich von der ersten Seite zur zweiten Seite mit einem ersten Winkel und dann ausgehend von einer Neigungsbruchstelle (18) mit einem zweiten Winkel, der größer ist als der erste, erweitern,
- wobei die dritte und die vierte Seite jeweils trapezförmig sind und/oder
- die fünfte und die sechste Seite (30e, 30f) des Rohlings jeweils in Form von zwei Trapezen jeweils mit einer größeren Grundfläche und einer kleineren Grundfläche vorliegen, die sich gegenseitig über die größere Grundfläche des ersten Trapezes verlängern, die an die kleinere Grundfläche des zweiten Trapezes angesetzt ist.

8. Rohling nach einem der Ansprüche 5 bis 7, **dadurch gekennzeichnet, dass** er eine Symmetrieebene (23) aufweist, die senkrecht zur ersten und zur zweiten Seite (30a, 30b) verläuft, die parallel zueinander verlaufen.

9. Rohling nach einem der Ansprüche 5 bis 8, **dadurch gekennzeichnet, dass**
- der erste Winkel (α) zwischen 0° und 15°, vorzugsweise zwischen 0° und 8°, liegt,
- der zweite Winkel (γ) geringer als 120°, vorzugsweise geringer als 90°, ist,
- der gesamte Erweiterungswinkel (β) der dritten und der vierten Seite zwischen der ersten und der zweiten Seite (30a, 30b) zwischen 1° und 15°, vorzugsweise zwischen 3° und 8°, liegt,
- und die Neigungsbruchstelle (18) von der ersten Seite (30a) ausgehend bei weniger als 85 %, vorzugsweise weniger als 75 % der kürzesten Entfernung (L2) zwischen der ersten und der zweiten Seite liegt.

10. Gießform zum Durchführen des Verfahrens nach einem der Ansprüche 1 bis 4, **dadurch gekennzeichnet, dass** sie zumindest einen Hohlraum zum Formen des Rohlings aufweist, der eine erste und eine zweite Seite (171a, 171b) aufweist, zwischen denen sich eine dritte und eine vierte Seite (171c, 171d) erstrecken, die sich ausgehend von der zweiten Seite (171a) zur ersten Seite mit einem ersten Winkel und dann ausgehend von einer Neigungsbruchstelle (180) mit einem zweiten Winkel, der größer ist als der erste, erweitern.

11. Gießform zum Durchführen des Verfahrens nach einem der Ansprüche 1 bis 4, **dadurch gekennzeichnet, dass** sie zumindest einen Hohlraum (17b) zum Formen des Rohlings aufweist, der durch eine erste und eine zweite kegelstumpfförmige Pyramide definiert ist, wobei die zweite Pyramide die Verlängerung der ersten Pyramide über die größere Grundfläche der ersten Pyramide ist, die exakt die kleinere Grundfläche der zweiten überlagert.

12. Gießform zum Durchführen des Verfahrens nach einem der Ansprüche 1 bis 4, **dadurch gekennzeichnet, dass** sie zumindest einen Hohlraum zum Formen des Rohlings aufweist, der enthält:
- eine erste und eine zweite Seite (171a, 171b), zwischen denen sich eine dritte und eine vierte Seite (171c, 171d) erstrecken, die jeweils in Trapezform vorliegen, und/oder
- eine fünfte und eine sechste Seite (171e, 171f) des Hohlraums, die jeweils in Form von zwei Trapezen jeweils mit einer größeren Grundfläche und einer kleineren Grundfläche vorliegen, die sich gegenseitig über die größere Grundfläche des ersten Trapezes verlängern, die an die kleinere Grundfläche des zweiten Trapezes angesetzt ist.

13. Gießform nach einem der Ansprüche 10 bis 12, **dadurch gekennzeichnet, dass**:
- der erste Winkel (α) zwischen 0° und 15°, vorzugsweise zwischen 0° und 8°, liegt,
- der zweite Winkel (γ) geringer als 120°, vorzugsweise geringer als 90°, ist,
- der gesamte Erweiterungswinkel (β) der dritten und der vierten Seite zwischen der ersten und der zweiten Seite (171, 171b) zwischen 1° und 15°, vorzugsweise zwischen 3° und 8°, liegt,
- und die Neigungsbruchstelle (18) von der ersten Seite (171a) ausgehend bei weniger als 85 %, vorzugsweise weniger als 75 % der kürzesten Entfernung (L2) zwischen der ersten und der zweiten Seite liegt.

## Claims

1. A method for producing at least one metal turbine engine part (19b), comprising steps consisting in:
a) casting a metal alloy in a mould (13) in order to produce a blank (3); and
b) machining the blank (3) in order to produce said at least one part, **characterized in that** the blank obtained by casting is a solid polyhedron having first and second sides (30a, 30b) between which third and fourth sides (30c,30d) extend, flaring apart from the first side (30a) towards the second side, first at a first angle and subsequently, from a break of slope (18), at a second angle larger than the first angle, and said at least one part is machined in the blank.

2. Method according to claim 1, **characterized in that** the blank is defined by first and second truncated pyramids (21a,21b), with the second pyramid being an extension of the first pyramid on the larger base of the first pyramid which exactly overlaps the smaller base of the second one.

3. Method according to claims 1 or 2, **characterized in that**:
- the third and fourth sides each have a generally trapezoidal shape, and/or,
- fifth and sixth sides (30e,30f) of the blank each have the general shape of two trapezoids, with each a larger base and a smaller base and one extending the other one on the larger base of the first trapezoid which is contiguous to the smaller base of the second trapezoid.

4. Method according to claims 1 or 2, **characterized in that**:
- said at least one part (19) is a blade having a longitudinal axis (191b) and, along such axis, a root (193b) at a first end, a heel (192b) at a second end, and a curved section vane (194b) which extends there between and has a first convex side and a second concave side,
- fifth and sixth sides (30e,30f) of the blank each have a general shape of two trapezoids which extend in the same plane, with each a larger base and a smaller base and one extending the other one on the larger base of the first trapezoid which is contiguous to the smaller base of the second trapezoid.

5. A blank obtained from the moulding according to step a) of claim 1, **characterized in that** the blank is a solid polyhedron having first and second sides (30a,30b) between which third and fourth sides (30c,30d) extend, flaring apart from the first side towards the second side, first at a first angle and subsequently, from a break of slope (18), at a second angle larger than the first angle.

6. A blank obtained from the method according to one of claims 1 to 4, **characterized in that** the blank is defined by first and second truncated pyramids (21a,21b), with the second pyramid being an extension of the first pyramid on the larger base of the first pyramid which exactly overlaps the smaller base of the second one.

7. A blank obtained from the method according to any one of claims 1 to 4, **characterized in that**:
- the blank has first and second sides (30a,30b) between which a third and a fourth sides (30c,30d) extend, flaring apart from the first side towards the second side, first at a first angle and subsequently, from a break of slope (18), at a second larger angle larger than the first angle,
- the third and fourth sides each have a generally trapezoidal shape, and/or,
- fifth and sixth sides (30e,30f) of the blank each have a general shape of two trapezoids, with each a larger base and a smaller base and one extending the other one on the larger base of the first trapezoid which is contiguous to the smaller base of the second trapezoid.

8. Blank according to one of claims 5 to 7, **characterized in that** it has a plane of symmetry (23) perpendicular to the first and second sides (30a,30b) which are mutually parallel.

9. Blank according to any one of claims 5 to 8, **characterized in that**:
- the first angle α ranges from 0° to 15°, and preferably from 0° to 8°,
- the second angle γ is smaller than 120°, and preferably smaller than 90°,
- the total flaring angle (β) of the third and fourth sides between the first and second sides (30a,30b) ranges from 1° to 15°, and preferably from 3° to 8°,
- and the break of slope is located at less than 85%, and preferably less than 75%, from the shortest distance (L2) between the first and second sides, starting from the first side (30a).

10. Mould for implementing the method according to one of claims 1 to 4, **characterized in that** it comprises at least one cavity for moulding the blank having first and second sides (171a,171b) between which third and fourth sides (171c,171d) extend, flaring apart from the second side (171a) towards the first side, first at a first angle and subsequently, from a break of slope (180), at a second angle larger than the first angle.

11. Mould comprising at least one cavity (17b) for moulding therein a blank defined by first and second truncated pyramids, with the second pyramid being an extension of the first pyramid on the larger base of the first pyramid which exactly overlaps the smaller base of the second one.

12. Mould for implementing the method according to one of claims 1 to 4, **characterized in that** it comprises at least one cavity for moulding the blank, which has:
- first and second sides (171a,171b) between which the third and fourth sides (171c,171d) extend, which have a general trapezoidal shape, and/or,
- fifth and sixth sides (171e,171f) of the cavity each have a general shape of two trapezoids, with each a larger base and a smaller base and one extending the other one on the larger base of the first trapezoid which is contiguous to the smaller base of the second trapezoid.

13. Mould according to any one of claims 10 to 12, **characterized in that**:
- the first angle (α) ranges from 0° to 15°, and preferably from 0° to 8°,
- the second angle (γ) is smaller than 120°, and preferably smaller than 90°,
- the total flaring angle (β) of the third and fourth sides between the first and second sides (171a,171b) ranges from 1° to 15°, and preferably from 3° to 8°,
- and the break of slope is located at less than 85%, and preferably less than 75%, from the shortest distance (L2) between the first and second sides, starting from the first side (171a).
